Europäisches Patentamt

European Patent Office

Office européen des brevets

(19)

(11) Veröffentlichungsnummer: **0 105 506**
A2

(12) # EUROPÄISCHE PATENTANMELDUNG

(21) Anmeldenummer: 83109839.7

(22) Anmeldetag: 01.10.83

(51) Int. Cl.³: **G 01 F 1/58**
G 01 F 5/00, G 01 P 5/08

(30) Priorität: 06.10.82 DE 3236909

(43) Veröffentlichungstag der Anmeldung:
18.04.84 Patentblatt 84/16

(84) Benannte Vertragsstaaten:
CH DE FR GB LI NL

(71) Anmelder: Turbo-Werk Messtechnik GbmH
Gremberger Strasse 151
D-5000 Köln 91(DE)

(72) Erfinder: Doll, Friedhelm
Hoffnung 17
D-5632 Wermelskirchen(DE)

(74) Vertreter: Selting, Günther, Dipl.-Ing. et al,
Deichmannhaus am Hauptbahnhof
D-5000 Köln 1(DE)

(54) **Messgerät zur magnetisch-induktiven Messung der Fliessgeschwindigkeit flüssiger Medien.**

(57) In ein Rohr (10) oder eine offene Rinne taucht eine Sonde (11) ein. Die Sonde (11) weist einen von der Flüssigkeit durchströmten Meßkanal (14) auf. Außerdem enthält die Sonde (12) einen Elektromagneten, der ein durch den Meßkanal (14) hindurchgehendes Magnetfeld erzeugt. An der Wand des Meßkanales (14) befinden sich Elektroden, an denen eine der Fließgeschwindigkeit der Flüssigkeit proportionale Spannung abgenommen werden kann.

FIG.1

EP 0 105 506 A2

Meßgerät zur magnetisch-induktiven Messung
der Fließgeschwindigkeit flüssiger Medien

Die Erfindung betrifft ein Meßgerät zur magnetisch-induktiven Messung der Fließgeschwindigkeit flüssiger Medien in einem Strömungskanal eines Rohres mit geschlossenem Querschnitt oder einer Rinne mit offenem Querschnitt, mit einer in die Flüssigkeit eintauchenden Sonde, die einen durchgehenden Meßkanal aufweist und einen in dem Meßkanal ein Magnetfeld erzeugenden Elektromagneten enthält, und mit mindestens zwei an der Wand des Meßkanals im Bereich des Magnetfeldes angeordneten Elektroden.

Es ist bekannt, die Fließgeschwindigkeit und damit den Durchfluß leitfähiger Flüssigkeiten in geschlossenen gefüllten Rohrleitungen mit Hilfe magnetisch-induktiver Durchflußmesser (MID) zu messen. Diese Durchflußmesser weisen einen Elektromagneten auf, der in dem Rohr oder Kanal ein Magnetfeld erzeugt. Durch die Bewegung der in der Flüssigkeit enthaltenen Leiterelemente in Querrichtung zum Magnetfeld entsteht ein elektrisches Feld, dessen Feldstärke bzw. elektrische Spannung gemessen werden kann und ein Maß für die Strömungsgeschwindigkeit bzw. die Durchflußmenge darstellt. Derartige Meßgeräte haben den Vorteil, daß sie den gesamten Strömungsquerschnitt des Rohres bzw. des Kanals erfassen. Nachteilig ist aber, daß insbesondere bei großen Strömungsquerschnitten entsprechend große Magnete benötigt werden, die schwergewichtig und teuer sind und erhebliche Abmessungen haben müssen. Außerdem wird bei großen Strömungsquerschnitten auch ein starkes Magnetfeld mit entsprechendem Strombedarf benötigt.

Zur Vermeidung dieser Nachteile sind Meßvorrichtungen bekannt (DE-A-30 37 913), bei denen nur ein Teilstrom des strömenden Mediums der Messung unterworfen wird. Ausgehend von diesem Teilstrom wird der gesamte Durchfluß ermittelt. Die bekannten Sonden sind von offener Bauform. Es handelt sich um Strömungskörper bei denen ein Magnetfeld aus einer Stelle des Gehäuses in den freien Raum hinein austritt. An der Außenseite des Strömungskörpers befinden sich Elektroden zur Messung der in der Flüssigkeit erzeugten elektrischen Feldstärke bzw. Spannung. Wegen des weitgeöffneten Magnetkreises wird das aus dem Gehäuse austretende Magnetfeld sehr weit gestreut, so daß die magnetische Feldstärke schwach ist und sich ein relativ schwaches Nutzsignal ergibt, das schwierig auszuwerten ist. Ferner bilden sich an dem in die Strömung eintauchenden Gehäuse Strömungswirbel, die die Messung zusätzlich beunruhigen und unsicher machen. Ein weiterer Nachteil solcher offenen Sonden besteht darin, daß benachbarte Metallteile das magnetische bzw. elektrische Feld und damit das Nutzsignal beeinflussen. Ferner entstehen im allgemeinen relativ große Linearitätsfehler im Zusammenhang mit der von der Reynoldszahl abhängigen Umströmung eines Sondenkörpers.

Bekannt ist ferner ein induktiver Strömungsmesser der eingangs genannten Art (DE-U-19 87 394), bei dem an der Wand des Strömungskanals ein Tragarm befestigt ist, an dem sich ein koaxial zum Strömungskanal ausgerichteter dünnwandiger Ring aus isolierendem Werkstoff befindet. In der Wand des Ringes sind Erregerspulen des Elektromagneten eingebettet, der im Innern des Ringes ein Magnetfeld erzeugt. Außerdem sind an der Wand des Ringes Elektroden zur Messung der im elektrischen Feld auftretenden Feldstärke bzw. Spannung befestigt. Dieser bekannte Durchflußmesser hat den Nachteil, daß ein erhebliches magnetisches Streufeld außerhalb des Ringes erzeugt wird. Da sich der Ring in der Mitte des Strömungskanals befindet, ragen Halter und Ring weit in die Strömung hinein und bewirken daher trotz der möglichst dünnwandigen Ausbildung des Ringes eine erhebliche Störung des Strömungsprofils. Diese Sonde hat vor allem den Nachteil, daß ihr ein in der Praxis kaum realisierbares Konzept zugrunde liegt, nämlich das einer Sonde, die im wesentlichen aus einem der Strömung ausgesetzten dünnwandigen Rohr besteht. Man benötigt nämlich zur Erzeugung eines Magnetfeldes, welches dieses "Rohr im Rohr" durchsetzen soll, Elektromagnete, deren räumliche Dimensionen die Realisierung der Sonde als dünnwandiges Rohr kaum zulassen.

Der Erfindung liegt die Aufgabe zugrunde, ein Meßgerät der eingangs genannten Art zu schaffen, bei dem der Elektromagnet ein möglichst geringes Streufeld erzeugt und das bei kompakter Bauweise genaue Messungen der Strömungsmenge ermöglicht.

- 4 -

Zur Lösung dieser Aufgabe ist erfindungsgemäß vorgesehen, daß der Meßkanal quer durch ein Gehäuse hindurchführt, das von der Wand des Strömungskanals aus in diesen hineinragt, daß der Meßkanal in der Nähe der Wand des Strömungskanals angeordnet ist und daß der Elektromagnet im Innern des Gehäuses angeordnet ist und einen durch eine Spule hindurchgehenden Kern aufweist, dessen Polstücke zu beiden Seiten des Meßkanals angeordnet sind.

Nach der Erfindung taucht in den Strömungskanal ein Gehäuse ein, durch das der Meßkanal quer hindurchgeht. Das Gehäuse ist innen hohl und ermöglicht die Unterbringung des Elektromagneten mit quer über dem Meßkanal angeordneter Spule. Der Elektromagnet weist einen Eisenkern auf, dessen Polstücke seitlich an dem Meßkanal angeordnet sind. Auf diese Weise wird das Magnetfeld im Innern des Meßkanals konzentriert und es entsteht praktisch kein Streufeld außerhalb des Meßkanals. Dadurch kann der Elektromagnet relativ klein und mit geringem Leistungsbedarf ausgebildet werden. Andererseits stört das Gehäuse die Strömung nur relativ wenig, weil es nicht bis zur Mitte des Strömungskanals in diesen hineinragt, sondern nur am Rande angeordnet ist. Während nach dem Stand der Technik der Meßkanal aus einen dünnen Ring besteht, der an einem schmalen Halter angeordnet ist, wird nach der Erfindung ein Gehäuse benutzt, das nicht sehr tief in den Strömungskanal hineinragt, wobei der Meßkanal als Bohrung durch das Gehäuse ausgeführt ist. Die im Innern des Strömungskanals befindliche Gehäuselänge sollte nicht größer sein als 1/4 des Durchmessers des Strömungskanals und vorzugsweise nicht größer als etwa 1/6 dieses Durchmessers. Dadurch wird die Strömung relativ wenig gestört, andererseits werden die für die Strömungsmessung benötigten elektrischen und magnetischen Komponenten in kompakter Form im Innern des geschlossenen Gehäuses angeordnet, das wie ein Stab in den Strömungskanal hineinragt.

Gemäß einer bevorzugten Ausführungsform der Erfindung ist vorgesehen, daß der Meßkanal in einem Abstand von der Wand des Strömungskanals angeordnet ist, der etwa 1/8 des Durchmessers des Strömungskanals beträgt. In einem Strömungskanal bildet sich ein bestimmtes Strömungsprofil aus. So ist beispielsweise die Strömungsgeschwindigkeit in Randnähe sehr klein, während sie zur Mitte hin zunimmt. In einem Abstand von D/8 von der Wand des Strömungskanals, wobei D der Durchmesser des Strömungskanals ist, entspricht der Strömungsvektor der mittleren Strömungsgeschwindigkeit über den gesamten Querschnitt, praktisch unabhängig von der Reynoldszahl. Die Form der Sonde (Zylinder mit Querbohrung als Meßkanal) ermöglicht nun die Ermittlung des Strömungsvektors an der Stelle D/8 von der Rohrwand entfernt und zwar derart, daß dieser Strömungsvektor unverfälscht und unbeeinflußt vom Sondenkörper gemessen wird. Eine Besonderheit der Bauform besteht darin, daß der im Meßkanal herrschende Strömungsvektor durch das in die Strömung eintauchende zylindrische Gehäuse nicht verfälscht bzw. geändert wird.

Bei einer bevorzugten Ausführungsform der Erfindung weist das Gehäuse einen Kunststoffkörper auf, durch den der Meßkanal hindurchführt, und die Polstücke des Elektromagneten sind beidseitig des Meßkanals in den Kunststoffkörper eingebettet. Eine derartige Sonde ist leicht herzustellen und erfordert keine Rohre oder andere Flüssigkeitsleitungen. Die Polstücke sind zu beiden Seiten des Meßkanals in den Kunststoffkörper eingebettet, so daß sichergestellt ist, daß sie möglichst nahe am Meßkanal liegen, jedoch nicht mit der strömenden Flüssigkeit in Berührung kommen.

Vorzugsweise ist die Breite des Gehäuses quer zur Strömungsrichtung über die gesamte in den Strömungskanal eintauchende Länge des Gehäuses nicht kleiner als im Bereich des Meßkanals. Die Breite des Gehäuses kann sich vom Meßkanal aus bis zur Wand des Strömungskanals vergrößern, so daß das Gehäuse konisch ausgebildet ist. Hierbei entsteht ein Selbstreinigungseffekt. Wenn an dem Gehäuse Schmutz oder Gegenstände hängenbleiben, wird durch die Strömung eine Kraftkomponente in Richtung zum Gehäuseende erzeugt, wodurch die Partikel oder Gegenstände von dem Gehäuse abgleiten.

Anstelle der Verwendung einer einzigen Sonde können auch mehrere Sonden an unterschiedlichen Stellen des Strömungskanals angeordnet sein, um die Strömungsgeschwindigkeiten an der verschiedenen Stellen zu messen und durch Mittelwertbildung eine mittlere Strömungsgeschwindigkeit zu ermitteln.

Im folgenden wird unter Bezugnahme auf die Zeichnungen ein Ausführungsbeispiel der Erfindung näher erläutert.

Es zeigen

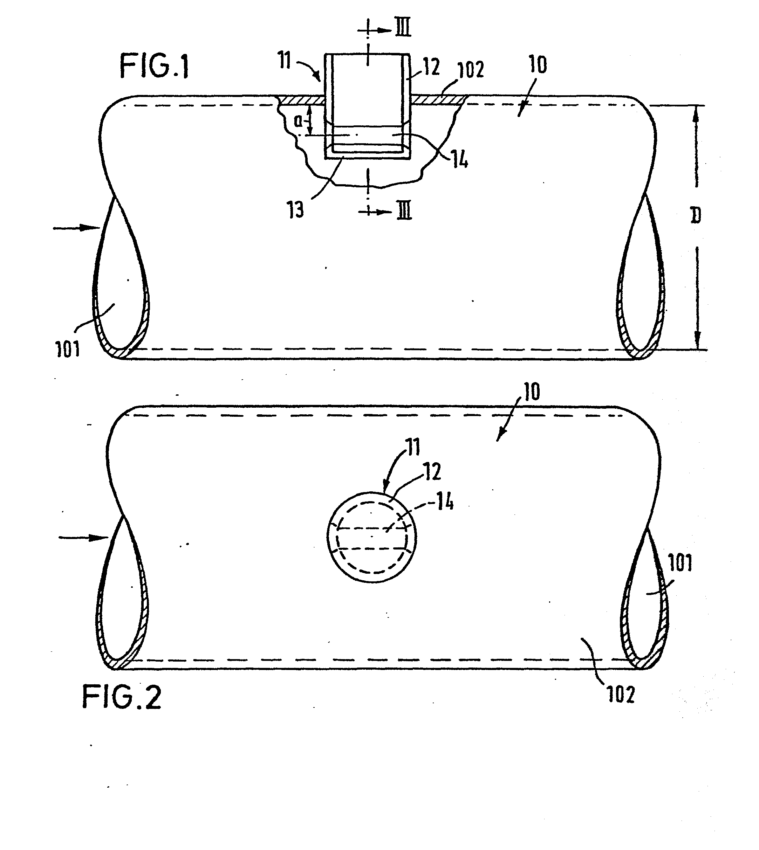

Fig. 1    eine Seitenansicht eines von einer elektrisch leitenden Flüssigkeit durchflossenen Rohres, teilweise aufgebrochen, zur Veranschaulichung der Sonde,

Fig. 2    eine Draufsicht von Fig. 1,

Fig. 3    einen Schnitt durch die Sonde entlang der Linie III-III von Fig. 1,

Fig. 4    einen Schnitt durch die Sonde entlang der
          Linie IV-IV von Fig. 3 und
Fig. 5    eine Draufsicht der Sonde.

Bei dem dargestellten Ausführungsbeispiel soll die Strömungsgeschwindigkeit einer in dem Strömungskanal 101 eines Rohres 10 strömenden elektrisch leitenden Flüssigkeit ermittelt werden. Zu diesem Zweck ragt durch die Wand 102 des Strömungskanals eine Sonde 11 in das Innere des Rohres hinein. Die Sonde 11 besteht aus einem zylindrischen topfförmigen Gehäuse 12, dessen Bodenwand 13 geschlossen ist. Die Sonde 11 weist einen quer durch sie hindurchgehenden Meßkanal 14 auf, der parallel zur Strömungsrichtung in dem Rohr 10 angeordnet ist. Die Sonde 11 taucht nur über einen Teil ihrer Länge in das Rohr 10 ein. Sie ist in einer entsprechenden Öffnung abdichtend befestigt, so daß an der Stelle der Sonde keine Flüssigkeit aus dem Rohr austreten kann. Alternativ ist es auch möglich, die Sonde vollständig im Innern des Rohres anzuordnen.

Die Mitte des Meßkanals 14 befindet sich in einem Abstand a von der Wand 102, der etwa 1/8 des Innendurchmessers D des Strömungskanals 101 beträgt. Die Weite des Meßkanals 14 beträgt 1/10 bis 1/20 der Weite des Strömungskanals 101.

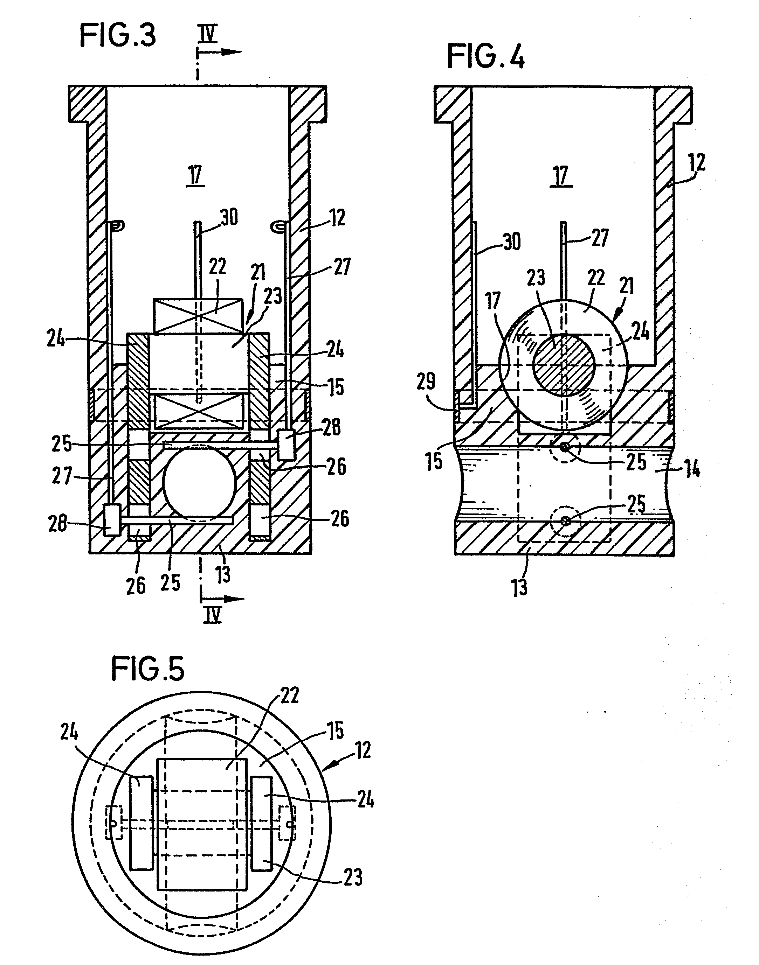

Wie die Fign. 3 und 4 zeigen, ist der untere Teil des Gehäuses 12 als voller Kunststoffkörper 15 ausgebildet. Der Kunststoffkörper 15 weist eine Querbohrung auf, die den Meßkanal 14 bildet.

Der Elektromagnet 21 weist eine Spule 22 auf, deren Achse rechtwinklig zu dem Meßkanal 14 verläuft und die mit ihrer unteren halbzylindrischen Hälfte in einer

- 8 -

halbzylindrischen Ausnehmung 16 in der Oberseite des Kunststoffkörpers 15 liegt, während die obere Spulenhälfte in den Gehäusehohlraum 17 hineinragt. Diese Spule 22 ist über (nicht dargestellte) Versorgungsleitungen an eine außerhalb der Sonde befindliche Stromquelle anschließbar. Durch die Spule 22 geht der aus weichmagnetischem Material bestehende Eisenkern 23 hindurch. Wie Fig. 3 zeigt, stoßen die Enden des Kernes 23 gegen plattenförmige Polstücke 24, die zu beiden Seiten des Meßkanals 14 in den Kunststoffkörper 15 eingebettet sind und die mit ihren Stirnseiten einander zugewandt sind. Der Kunststoffkörper 15 besteht aus Polytetrafluoräthylen.

In dem zwischen den beiden Polstücken 24 liegenden Bereich der Bohrung 16 sind an zwei im Querschnitt der Bohrung 16 einander diametral gegenüberliegenden Stellen Elektroden 25 angeordnet. Diese Elektroden 25 bestehen aus Metallstäben, die tangential zum Meßkanal 14 verlaufen und mit einem Teil ihrer Umfangsfläche in den Meßkanal hineinragen. Von den parallelen Elektroden, die sich quer zum Meßkanal erstrecken, verläuft die eine Elektrode in Richtung der oberen horizontalen Tangente und die andere in Richtung der unteren horizontalen Tangente zum Meßkanal 14. Die Elektroden sind, mit Ausnahme ihrer freiliegenden Oberflächenbereiche im Meßkanal, in den Kunstoffkörper 15 eingebettet und sie führen rechtwinklig zu den Polstücken 24 durch Löcher 26 in den Polstücken 24 hindurch. An jeweils einem Ende einer jeden Elektrode ist im Inneren des Kunststoffkörpers 15 ein Zuleitungsstab 27 mit einem Anschlußstück 28 befestigt. Die Zuleitungsstäbe 27 führen aus dem Kunststoffkörper 15 in den Raum 17. Die Elektroden erfordern wegen ihrer tangentialen Anordnung keinen zusätzlichen Raum. Da sie über einen langen Weg mit dem Material des Kunststoffkörpers umspritzt und fest von diesem umschlossen sind, ergibt sich eine gute Abdichtung gegen das Austreten von Flüssigkeit aus dem Meßkanal 14.

Oberhalb des Meßkanals 14 ist das Gehäuse 12 von einer bandförmigen Masseelektrode 29 umgeben, die über einen Leiterstab 30 mit dem Raum 17 in Verbindung steht.

Durch einen in der Spule 22 fließenden Strom wird ein Magnetfeld erzeugt, das in dem Magnetkern 23 konzentriert wird. Die magnetischen Feldlinien, die aus den einander zugewandten Seiten der Polstücke 24 aus- bzw. eintreten, gehen rechtwinklig durch den Meßkanal 14 hindurch, so daß im Meßkanal 14 ein quer zur Fließrichtung der Flüssigkeit verlaufendes weitgehend homogenes Magnetfeld entsteht. Die in der Flüssigkeit enthaltenen leitfähigen Elemente erzeugen zwischen den Elektroden 25 eine elektrische Spannung, die der Bewegungsgeschwindigkeit der Flüssigkeit proportional ist. Die kürzeste Verbindungslinie zwischen den freiliegenden Bereichen der beiden Elektroden 25 steht senkrecht zu den zwischen den Polstücken 24 verlaufenden Verbindungslinien bzw. Feldlinien.

ANSPRÜCHE


1. Meßgerät zur Messung der magnetisch-induktiven
Fließgeschwindigkeit flüssiger Medien in einem Strömungskanal (101) eines Rohres mit geschlossenem
Querschnitt oder einer Rinne mit offenem Querschnitt, mit einer in die Flüssigkeit eintauchenden
Sonde (11), die einen durchgehenden Meßkanal (14)
aufweist und einen in dem Meßkanal (14) ein Magnetfeld erzeugenden Elektromagneten enthält, und mit
mindestens zwei an der Wand des Meßkanals (14) im
Bereich des Magnetfeldes angeordneten Elektroden
(25),
d a d u r c h   g e k e n n z e i c h n e t ,
daß der Meßkanal (14) quer durch ein Gehäuse (12)
hindurchführt, das von der Wand des Strömungskanals
aus in diesen hineinragt, daß der Meßkanal (14) in
der Nähe der Wand (102) des Strömungskanals (101)
angeordnet ist und daß der Elektromagnet (21) im
Innern des Gehäuses (12) angeordnet ist und einen
durch eine Spule (22) hindurchgehenden Kern (23)
aufweist, dessen Polstücke (24) zu beiden Seiten des
Meßkanals (14) angeordnet sind.


2. Meßgerät nach Anspruch 1, dadurch gekennzeichnet,
daß der Meßkanal (14) in einem Abstand (a) von der
Wand des Strömungskanals angeordnet ist, der etwa
1/8 des Durchmessers (D) des Strömungskanals beträgt.


3. Meßgerät nach Anspruch 1 oder 2, dadurch gekennzeichnet, daß das Gehäuse (12) einen Kunststoffkörper aufweist, durch den der Meßkanal (14) hindurchführt und daß die Polstücke (24) des Elektromagneten (21) beidseitig des Meßkanals (14) in den Kunststoffkörper (15) eingebettet sind.

4. Meßgerät nach Anspruch 3, dadurch gekennzeichnet, daß mindestens eine der Elektroden (25) tangential zu dem Meßkanal (14) verläuft, mit einem Teil ihrer Umfangsfläche im Meßkanal (14) freiliegt und auf einem wesentlichen Teil ihrer Länge in den Kunststoffkörper abdichtend eingebettet ist.

5. Meßgerät nach Anspruch 4, dadurch gekennzeichnet, daß mindestens eines der Polstücke (24) ein Loch (26) für den Durchtritt der Elektrode (25) aufweist.

6. Meßgerät nach einem der Ansprüche 1 bis 5, dadurch gekennzeichnet, daß die Breite des Gehäuses (12) quer zur Strömungsrichtung über die gesamte in den Strömungskanal eintauchende Länge des Gehäuses nicht kleiner ist als im Bereich des Meßkanals (14).

7. Meßgerät nach Anspruch 6, dadurch gekennzeichnet, daß das Gehäuse (12) im wesentlichen zylindrisch ist.

8. Meßgerät nach einem der Ansprüche 1 bis 7, dadurch gekennzeichnet, daß die Spule (22) quer über dem Meßkanal (14) angeordnet ist.

9. Meßgerät nach einem der vorhergehenden Ansprüche, dadurch gekennzeichnet, daß in dem Strömungskanal mehrere Sonden (11) angeordnet sind, deren Ausgangssignale gemeinsam einer Mittelwertbildung unterzogen werden.

0105506

FIG.1

FIG.2

FIG.3

FIG.4

FIG.5